# EUROPEAN PATENT SPECIFICATION

(11) **EP 0 611 883 B1**
(45) Date of publication and mention of the grant of the patent: **08.07.1998**
(21) Application number: 94102592.6
(22) Date of filing: 21.02.1994
(51) Int. Cl.: F02F 1/42, F01L 1/26

(54) **Internal combustion engine**
Brennkraftmaschine
Moteur à combustion interne

(30) Priority: 19.02.1993 JP 30597/93
(43) Date of publication of application: 24.08.1994
(73) Proprietor: YAMAHA HATSUDOKI KABUSHIKI KAISHA, Iwata-shi Shizuoka-ken, 438 (JP)
(72) Inventor: Yoshikawa, Masaaki, Iwata-shi, Shizuoka-ken, 438 (JP)
(74) Representative: Grünecker, Kinkeldey, Stockmair & Schwanhäusser Anwaltssozietät

(56) References cited:
- EP-A- 0 390 589
- EP-A- 0 462 568
- DE-A- 3 838 305

## Description

The present invention relates to an internal combustion engine comprising a cylinder block defining at least one cylinder bore in which a piston reciprocates, a crankshaft journaled for rotation about an axis at one end of said cylinder bore and driven by said piston, a cylinder head affixed to said cylinder block and enclosing the other end of said cylinder bore, at least two intake passages formed in said cylinder head (17) and terminated at associated intake valve seats lying on opposite sides of a first plane containing the axis of said cylinder bore and extending perpendicularly to the axis of rotation of said crankshaft, at least two poppet-type intake valves supported for reciprocation about respective reciprocal axes by said cylinder head and having head portions for controlling the flow through said intake valve seats, whereby said intake valves' reciprocal axes lying at acute angles to a second plane containing said cylinder bore axis extending perpendicularly to said first plane and at opposite acute angles to said first plane.

The use of multiple valves for improving engine performance is well known and generally accepted. When using multiple valves it is the common practice to provide a pair of valve serving related ports that are disposed on one side of a plane containing the axis of the cylinder bore and wherein the valves reciprocate about reciprocal axes that are disposed at an acute angle to this plane. In order to increase the amount of valve lift without decreasing the compression ratio it has also been the practice to incline the valve stems and associated ports to a plane that is perpendicular to the first-mentioned plane and which also passes through the cylinder bore axis. The valves are disposed at opposite acute angles to this plane. As a result of this construction, when the valves serve the intake function, the flow which enters the chamber through the individual valves will tend to intersect in the cylinder bore. This has certain disadvantages. Specifically, it is not always possible to provide the desired flow pattern in the cylinder bore and interfering turbulence may occur.

The use of two intake valves disposed as in the preceding paragraph is also used in combination with engines having three intake valves per cylinder. The two valves having the disposition disclosed form side intake valves and a centre intake valve is disposed between these two side intake valves and closer to the outer periphery of the cylinder bore on the side opposite the first plane. Again, this can result in undesired air flow in the combustion chamber and particularly turbulence or interference in the air flows from the individual intake passage.

Moreover, when multiple valves are employed per 1 cylinder in an engine, the construction of the cylinder head and valve actuating mechanism tends to become rather complicated. This can also give rise to other problems such as problems incorrectly locating the fastening hold down bolts for the cylinder head. That is, it is desirable to provide substantially uniform spacing around the cylinder bore for the cylinder head hold down bolts and with multiple valve arrangements this can be as time difficult.

These head bolt disposal problems may aggrevate as the valves are normally operated by one or, more frequently, two over head mounted camshafts. These camshafts may be journaled directly on the cylinder head or in components which form a portion of the cylinder head assembly. This requires the provision of additional bearing caps for journaling the camshafts and at times the bearing arrangement and the hold-down fasteners for the bearing caps can interfere with or obscure the hold-down bolts for the cylinder head itself.

Because of the problems mentioned in connection with the complexity of multiple valve over head valve cylinder heads it has been times the practice to employ a cylinder head assembly that is made up of a number of castings that are secured to each other. Of course, as the number of pieces increase, the bolting arrangement, machining and cast of such a cylinder head can become larger. An internal combustion engine according to the preamble of claim 1 is known from document EP-A-462 568.

However, since the two valves having the deposition as disclosed as side intake valves and a centre intake valve is disposed between these two side intake valves and closer to the outer periphery of the cylinder bore on the side opposite the first place, it is very likely that this can result in undesired air flow in the combustion chamber and particularly turbulence or interference in the air flows from the individual intake passage.

Therefore, it is still an objective of the present invention to improve an internal combustion engine as indicated above such that the valve placement is improved and that large valves lifts, specifically at the intake side, can be accomplished without reducing the compression ratio and without causing an interfering flow from the individual intake passages in the combustion chamber.

According to the invention, this objective is solved for an internal combustion engine as indicated above in that said reciprocal axes intersecting at a point below a head portion of the piston when in its bottom dead centre position, said point of intersection of the reciprocal axes of the two intake valves being disposed within said first plane and being disposed closer to a crankshaft axis than to the upper head portion of the piston when in its bottom dead centre position, and in that the valve seats and associated intake passages are configured such as to generate a tumble action within the combustion chamber.

According to a preferred embodiment of the present invention, the opposite inclination of the reciprocal axes of said two or said side intake valves with respect to the first plane being equal to each other and amounts preferably to approximately 2°.

The present invention is particularly effective in assuring tumble action of the charge discharged through the intake valve controlled ports in the combustion chamber in that the air flowing from both of the intake ports does not collide but flows in a substantially axial direction in the cylinder forming a vertical tumble action. As a result larger diameters can be chosen for the valve lifters to increase engine output and, at the same time, stable combustion can be achieved through using a leaner air/fuel mixture.

Other preferred embodiments of the present invention are laid down in the further subclaims.

Preferrably the axes of the above-mentioned intake valves intersect additionally on the second vertical plane which contains the cylinder bore axis and extends in parallel to the crankshaft axis.

According to a further preferred embodiment of the present invention same is applied to a five valve engine having three intake valves and two exhaust valves, wherein the condition of the disposal of the reciprocal axes according to the present invention is met by the two side intake valves, which frame a centre intake valve which preferrably is disposed in line with the first vertical plane extending perpendicularly to an associated intake valve operating camshaft axis. Other preferred embodiments of the present invention relate to the disposal of the bearing caps and cylinder head fastening bolts assuring an assembly which can easily be machined leading to a compacted cylinder head structure and promote ease of servicing and assembling of the hole cylinder head arrangement of the engine.

In the following the present invention is explained in greater detail by means of a preferred embodiment thereof in conjunction with the accompanying drawings, wherein:

### Brief Description of the Drawings

Figure 1 is a cross-sectional view taken through a portion of an internal combustion engine constructed in accordance with a first embodiment of the invention along the line 1-1 of Figure 3 and generally parallel to the axis of rotation of the engine crankshaft;
Figure 2 is a cross-sectional view taken along a plane perpendicular to the plane of Figure 1;
Figure 3 is a top-plan view of the cylinder head with the camshaft, camshafts, tappets, valves and other components removed so at to more clearly show the construction;
Figure 4 is a bottom-plan view of the cylinder head showing the valve placement with the ports being illustrated in phantom.

### Detailed Description of the Preferred Embodiments

Referring now in detail to the drawings and internal combustion engine constructed in accordance with an embodiment of the invention is shown partially in the figures and as identified generally by the Reference 11. The invention is described by reference to a single cylinder of the engine 11, and it will be readily apparent to those skilled in the art how the invention can be practiced with multiple cylinder engines of varying configurations (i.e., inline, v-type, etc). Also since the invention deals primarily with the induction and valving system associated with the cylinder head only the upper portion of the engine 11 has been depicted. Where components of the engine are not illustrated or described, they may be considered to be conventional.

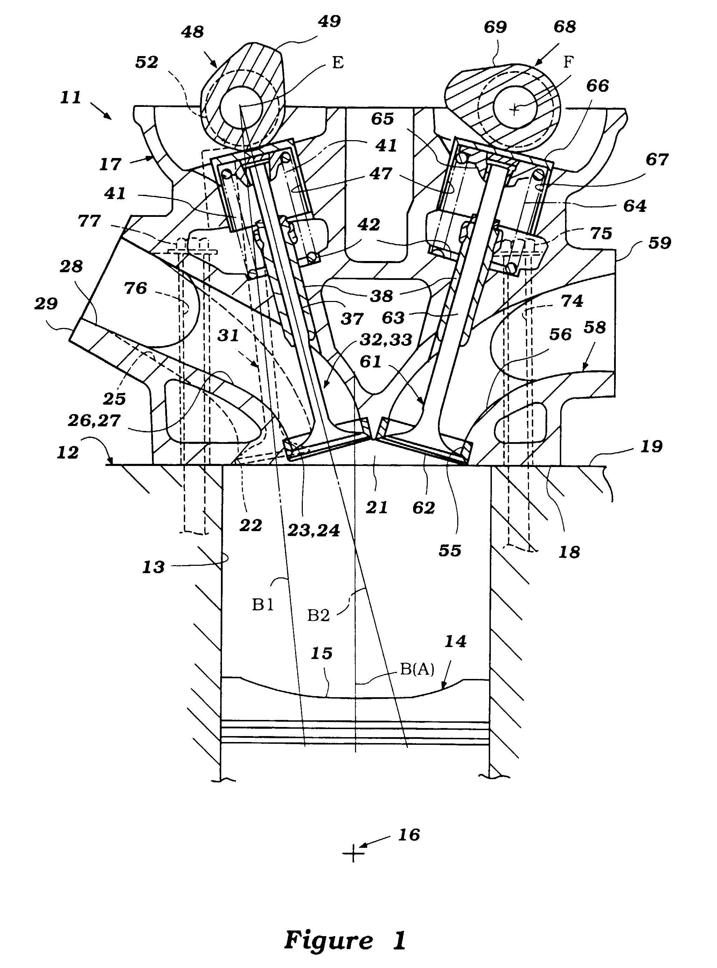

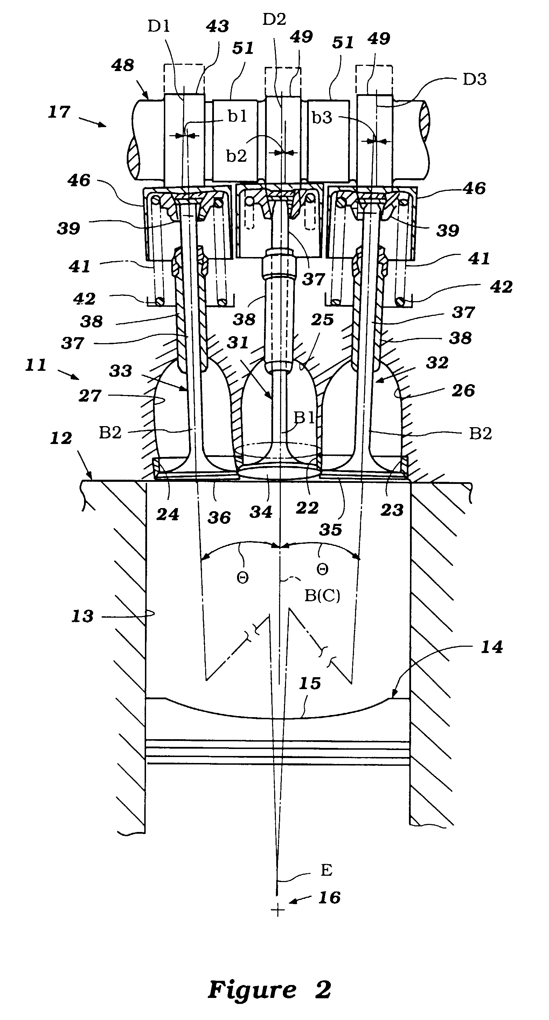

The engine 11 includes a cylinder block 12 which may be formed any suitable material and which has a cylinder bore 13 formed therein. The cylinder bore 13 slidably receives a piston 14 which may have a recessed bowl 15 formed in its upper end. The piston 14 is connected to a crankshaft (not shown) which is supported for rotation in a well-known manner within a crankcase chamber formed at the end of the cylinder block 12 and which rotates about a rotational axis 16. The location of the rotational axis 16 is somewhat foreshortened in Figures 1 and 2 so as to represent a principle of the invention, as will be described.

The engine 11 is water cooled and for this purpose the cylinder block 12 is provided with a coaling jacket (not shown) through which liquid coolant is circulated in a well-known manner.

A cylinder head, indicated generally by the reference numeral 17 is affixed, in a manner to be described, to the cylinder block 12. This cylinder head 17 has a lower sealing surface 18 which is sealingly engaged with a cylinder head gasket (not shown) interposed between the cylinder head surface 18 and an upper deck surface 19 of the cylinder block 12. The cylinder head lower surface is formed with a recess 21 which is bounded by the sealing surface 18 and which coopetrates with the head of the piston 14 and cylinder bore 13 to form the combustion chamber of the engine, the volume of which varies cyclicly as the piston 14 reciprocates in the cylinder bore 13.

The cylinder bore 13 has an axis B and this axis lies on a second plane A which extends perpendicularly to the plane of Figure 1 and which generally divides the cylinder head 11 into an intake side shown on the left hand side of Figure 1 and an exhaust side shown on the right hand side of Figure 1. The axis of rotation 16 of the crankshaft also lies on this plane A. Three intake valves seats comprised of a center valve seat 22 and a pair of side valve seats 23 and 24 are affixed to the cylinder head 17 in the combustion chamber recess 21 in an appropriate manner, as by pressing inserts into place. These valve seats 22, 23 and 24 are formed at the termination of intake passages 25, 26 and 27, respectively, which are formed in the cylinder head 17 on its inlet side. These passages merge into a common intake port 28 formed in an external surface 29 of the cylinder head 17. An appropriate air charge and fuel charge, if desired, is supplied to the intake passages 25, 26 and 27 from an induction system (not shown). This induction system may be of any known type.

Three poppet-type intake valves comprised of a center intake valve 31 and a pair of side intake valves 32 and 33 cooperate with the valve seats 22, 23 and 24 so as to control the flow through them. These poppet-type valves 31, 32 and 33 have head portions 34, 35 and 36, respectively, that cooperate with the valve seats 22, 23 and 24 in a well-known manner.

Each poppet-type valve 34, 35 and 36 has a stem portion 37 that is supported for reciprocation within the cylinder head 17 by a pressed or cast in valve guide 38. The upper ends of the stems 37 have affixed to them keeper retainer assemblies 39 so as to retain one end of a coil spring assembly 41 in engagement with the valve stems 37. The opposite ends of the springs 41 bear against machined surfaces 42 of the cylinder head 17 so as to urge the intake valves 31, 32 and 33 to their closed position, as is well known in this art.

It should be noted that the reciprocal axis B-1 of the center intake valve 31 lies substantially at an acute angle to the plane A containing the cylinder bore axis B and substantially on a first plane C perpendicular to the plane A and also containing the cylinder bore axis B. Thus, this center intake valve 31 is in fact on the center of the periphery of the cylinder bore 13 but spaced inwardly therefrom, for a reason to be described.

The side intake valves 32 and 33 have their axes of reciprocation B-2 lying in a common plane that is disposed at a greater acute angle to the second plane B-A containing the cylinder bore axis B. These axes are disposed on opposite sides of the plane C. The axes B-2 are also disposed at acute angles θ to the plane C containing the cylinder bore axis B so that they intersect at a point E which is disposed below the head portion 15 of the piston 14 when in its bottom dead center position as shown in the figures and displaced toward the crankshaft axis 16.
This means that the intake charge which enters the combustion chamber from the respective intake passages 26 and 27 will not intersect with each other. As a result, this charge may be directed into the combustion chamber so as to create a slight tumble action. If it is desired to augment this tumble action there may be provided a tumble control valve of any of the types shown in the co-pending European patent application 93 111 326.0 the disclsoure of which is incorporated herein by reference. Alternatively, other types of tumble control valves may be employed for this purpose.

It should be noted that the intake passages 25, 26 and 27 have an downwardly inclined portion which intersects a curved portion which has its respective axis aligned with the respective axes B-1 and B-2 of the valve stems 37 of the respective valves 31, 32 and 33. In one specific preferred embodiment of the invention, the angle of inclination of the two side intake valves 32, 33 with respect to the first plane C is equal and that equal opposite angle θ is approximately 2° (two degrees), but the choice of this angle will depend upon the other geometric relationships of the engine so as to ensure that the point E falls below the top dead center position 14 of the piston toward the axis of the rotation 16 of the crankshaft so as to achieve the aforenoted result.

As the two side intake valves 32, 33 are disposed under the same inclination with respect to the second vertical plane A containing the crankshaft axis and the cylinder bore axis B the point of intersection E of their axes B-2 is located in said plane of inclination of the side intake valves 32, 33. However, in view of their symmetrical disposal with respect the first plane C said point of intersection E is also disposed on said first plane C. Finally, under steeper disposal of the side intake valves 32, 33 than in the present embodiment, the point of intersection E might additionally be disposed on the second plane A.

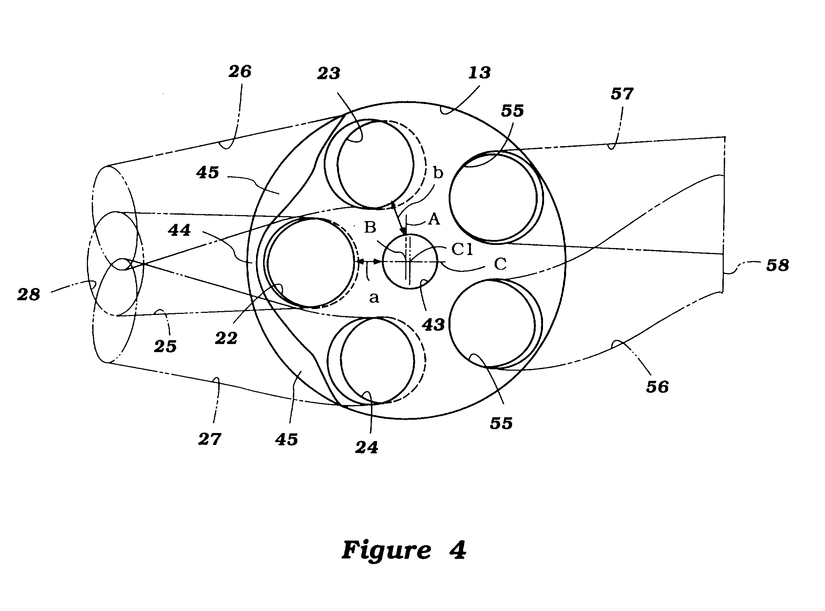

As may be seen from Figure 4, the center intake valve 31 is disposed at a lesser distance a to a spark plug receiving aperture 43 (formed centrally in the combustion chamber with its axis c-1 being disposed slightly offset along the first plane C from the cylinder bore axis B) than the side intake valve seats 23 and 24 which are disposed under the corresponding bigger distance b from said spark plug receiving aperture 43. This permits a squish area 44 to be formed in the outer periphery of the cylinder head 17 allowing a large squish area 45 to be formed on the sides between the center intake valve seat 22 and the side intake valve seats 23 and 24 so as to promote a greater squish action and improve turbulence for improving low speed running and combustion. This offsetting of the center intake valve toward the cylinder bore axis B also permits, in addition to the squish action, a reduced combustion chamber volume and, accordingly, a higher combustion ratio.

Thimble-type tappets 46 are slidably supported within bores 47 formed integrally in the cylinder head 17 and which their axes extending generally parallel to the axes of the respective stems 37 of the intake valves 31, 32 and 33. Because the side intake valves 32 and 33 are skewed relative to the first plane C, these bores 47 may be spaced from each other without intersecting each other. This also easily permits these bores to be formed in the cylinder head 17 rather than a separate cam carrier member which is fixed to the cylinder head 17 thus simplifying the machining operation for the cylinder head, 17.

An intake camshaft 48 is rotatably journaled about an axis F within the cylinder head 17 in a manner to be described and has cam lobes 49 that cooperate with the thimble tappets 47 for operating them and the intake valves 31, 32 and 33 in a well-known manner. It should be noted that the common plane containing the axes B-2 of the side intake valves 32 and 33 and a plane containing the axis B-1 of reciprocation of the center intake valve 31 intersect at the point F which is coincident to the axis of rotation of the intake camshaft 48. Also it should be noted that this axis F is disposed inwardly from the periphery of the cylinder bore 13 as viewed in Figure 1. The advantages of this construction will be described later. The intake camshaft 48 is driven at 1/2 crankshaft speed from the crankshaft by any suitable mechanism.

Even though the axis B-1 of the center intake valve 31 lies on the first plane C, the cam lobe 49 associated with it has its center D-2 offset to one side by the dimension b-2 with this offset being toward the side intake valve 32 as seen in Figure 2. This slight offset gives a rotational effect to the thimble tappet 46 which will cause it to rotate and minimize wear both on the thimble tappet 46 and also on the cylinder head bore 47 and the intake valve 31.

Because the heads of the thimble tappets 46 associated with the side intake valves 32 and 33 are disposed under a small angle, the cam lobes 49 associated with the side valve operating tappets may be slightly tapered so as to minimize wear. In addition, the centers of these lobes D-1 and D-3 are offset to the distances b-1 and b-3 from the centers of the thimble tappets 46 so as to cause a rotational effect on these thimble tappets for the same reason.

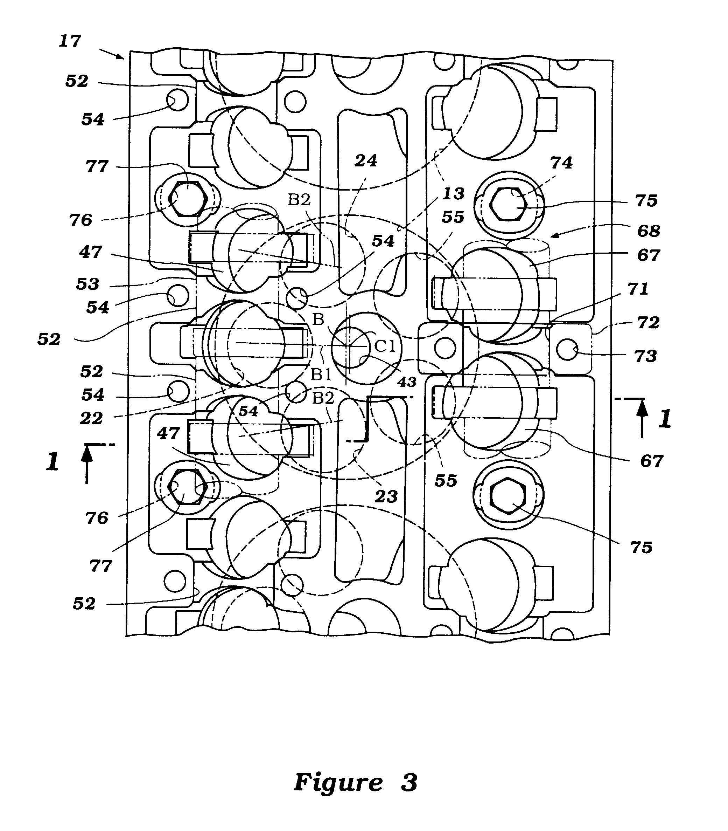

The intake camshaft 48 is provided with a pair of bearing surfaces 51 that are disposed between the cam lobe 49 for operating the center intake valve 31 and the cam lobes 49 that operate the side intake valve 32 and 33, respectively. These bearing surfaces are journaled within respective bearing surfaces 52 machined directly in the upper surface of the cylinder head 17. Bearing caps shown in phantom in Figure 3 and identified by the Reference 53 are affixed to the cylinder head 17 by means of threaded fasteners which pass through holes 54 formed in the cylinder head 17 at locations disposed between the cam lobes 49. Again, these bearing surfaces 52 may be formed directly in the cylinder head 17, and thus avoid the separate cam carrier construction used with other types of five-valve-per-cylinder engines.

A pair of exhaust valve seats 55 are pressed into the cylinder head 17 on the side of the second plane A opposite to the intake side. It should be noted that the valve seats 55 are offset from the second plane A containing the clyinder bore axis B while this plane slightly intersects the intake valve seats 23 and 24. This offsetting tends to permit a higher compression ratio and a reduced combustion chamber volume so that there will be less surface quenching. The exhaust valve seats 55 are formed at the end of respective exhaust pasages 56 and 57 formed in this side of the cylinder head and which are siamesed and form a common exhaust outlet opening 58 in an outer surface 59 of the cylinder head 17.

Poppet-type exhaust valves 61 have head portions 62 that cooperate with the valve seats 55 for opening and closing them. These exhaust valves have stem portions 63 that are supported within valve guides 38 pressed or otherwise fixed to the cylinder head assembly 17 and which define the reciprocal axes for the exhaust valve 64. These axes lie in a common plane that is disposed at acute angles to the record plane A containing the cylinder bore axis B and which acute angle is less than the acute angle of the side intake valves 32 and 33 and greater than that of the center intake valve 31.

Coil compression springs 64 encircle the exhaust valve stems 63 and bear against keeper retainer assemblies 65 and cylinder head machined surfaces 42 for urging the exhaust valves 61 to their closed positions.

Thimble-type tappets 66 are slidably supported within bores 67 formed directly in the cylinder head 17 and are associated with the exhaust valves 61 for opening them. These thimble tappets 66 are operatcd by an exhaust camshaft 68 that is rotatable about an axis G which is parallel to the axis E of the intake camshaft 48 but which is spaced a greater distance from the cylinder bore axis B than the axis F Cam lobe 69 on the camshaft 68 engage the thimble tappets 66 for operating them in a well-known manner.

The exhaust camshaft 68 is driven in a known manner and is provided with bearing surfaces disposed between the cam lobes 69 that are rotatably journaled within a bearing surface 71 machined in the cylinder head 17. Bearing caps are held to these bearing surfaces 71 as indicated in broken lines at 72 in Figure 3 by means of threaded fasteners which pass through openings 73 formed in the cylinder head 17.

It has been noted that the cylinder head 17 is affixed to the cylinder block 12 and the way in which this is done will now be described by primary reference to Figures 1 and 3. It will be seen that a pair of holes 74 are formed in the cylinder head 17 under the exhaust camshaft 68 on the exhaust side of the engine and these receive threaded fasteners 75 for cylinder head fold down purposes. In a similar manner, a pair of hold-down openings 76 are formed on the intake side of the cylinder head and these holes 76 are disposed at the same distance from the cylinder bore axis B as the hole 74 on the exhaust side. This is possible since the intake camshaft axis F is disposed inwardly thereof and hence threaded fasteners 77 may be freely inserted into the hole 76 for hold-down purposes without necessitating removal of the intake camshaft 48 and while maintaining uniform spacing. It should be noted that the hold-down hole 76 are basically aligned with and are at the same distance from the plane A as the bearing cap hole 54 so as to facilitate machining.

It should be readily apparent from the foregoing description that the described construction permits a very effective induction system and cylinder head arrangement for a multiple valve engine. This can be done through the use of a single cylinder head casting without requiring multi-piece construction and permits the positioning of the induction system so that the desired flow pattern can be achieve in the combustion chamber under all running conditions without interfering or intersecting flows from the various intake passages. Of course, this action may also be augmented under some running conditions by a tumble valve arrangement as described.
However, it should be readily apparent from the foregoing description that certain features of the afore-described engine such as the cylinder head affixing structure (disposal of head bolts and bearing caps fastening means at the intake and exhaust sides of the engine) can be applied also independently of the selection of a certain, preferably equal, inclination of the side intake valves 32, 33 with respect to the first plane C containing the reciprocal axis B-1 of the center intake valve 31.

## Claims

1. Internal combustion engine comprising a cylinder block (12) defining at least one cylinder bore (13) in which a piston (14) reciprocates, a crankshaft journaled for rotation about an axis (16) at one end of said cylinder bore (13) and driven by said piston (14), a cylinder head (17) affixed to said cylinder block (12) and enclosing the other end of said cylinder bore (13), at least two intake passages (26, 27) formed in said cylinder head (17) and terminated at associated intake valve seats (23, 24) lying on opposite sides of a first plane (C) containing the axis (B) of said cylinder bore (13) and extending perpendicularly to the axis of rotation (16) of said crankshaft, at least two poppet-type intake valves (32, 33) supported for reciprocation about respective reciprocal axes (B-2) by said cylinder head (17) and having head portions for controlling the flow through said intake valve seats (23, 24), whereby said intake valves' reciprocal axes (B-2) lying at acute angles to a second plane (A) containing said cylinder bore axis (B) extending perpendicularly to said first plane (A) and at opposite acute angles to said first plane (C), **characterized in that** said reciprocal axes (B-2) intersecting at a point (E) below a head portion (15) of the piston (14) when in its bottom dead centre position, said point of intersection (E) of the reciprocal axes (B-2) of the two intake valves (32,33) being disposed within said first plane (C) and being disposed closer to a crankshaft axis (16) than to the upper head portion (15) of the piston (14) when in its bottom dead centre position, and in that the valve seats (23, 24) and associated intake passages (26, 27) are configured such as to generate a tumble action within the combustion chamber.

2. Internal combustion engine as claimed in claim 1, **characterised in that** the intake passages (26,27) have downstream portions that extend generally in parallel to the reciprocal axes (B-2) of the associated poppet-type intake valves (32,33) adjacent respective intake valve seats (23,24) .

3. Internal combustion engine as claimed in claim 1 or 2, **characterised in that** three intake passages (25,26,27) are provided leading to three associated intake valve seats (22,23,24) controlled by two side intake valves (32,33) and one centre intake valve (31) said centre intake valve (31) and the associated intake valve seat (22) being disposed substantially on the first plane (C) and between the pair of intake valve seats (23,24) belonging to the side intake valves (32,33),said centre intake valve (32) being supported for reciprocation along a reciprocal axis (B-1) which coincides with the first plane (C).

4. Internal combustion engine as claimed in claim 3, **characterised in that** the reciprocal axis (B-1) of the centre intake valve (31) substantially coincides with the first plane (C) and extends at a lesser acute angle to the second plane (A) then the reciprocal axes (B-2) of the pair of side intake valves (32,33).

5. Internal combustion engine as claimed in at least one of the preceding claims 1 to 4, **characterised in that** the intake valves (31,32,33) are operated by an intake camshaft (48) rotatably journaled by the cylinder head (17) and actuating each of the intake valves (31,32,33) through respective thimble tappets (46), said intake camshaft (48) having cam lobes (49) for each of the intake valves (31,32,33), the reciprocal axes (B-1, B-2) of the intake valves (31,32,33) intersecting the axis of rotation (F) of said intake camshaft (48).

6. Internal combustion engine as claimed in at least one of the preceding claims 1 to 5, **characterised in that** the opposite inclination of the reciprocal axes (B-2) of said two or said side intake valves (32,33) with respect to the first plane (C) being equal to each other and amounts preferably to approximately 2°.

7. Internal combustion engine as claimed in claim 5 or 6, **characterised in that** the cam lobes (49) of the intake camshaft (48) engage the respective thimble tappets (46) at a point offset from the centre of the tappets (46) for exerting a rotational force on the thimble tappets (46).

8. Internal combustion engine as claimed in claim 7, **characterised in that** the cam lobes (49) associated with the thimble tappets (46) of the pair of side intake valves (32,33) have their centres disposed further from the first plane (C) then the centre of the respective thimble tappets (46).

9. Internal combustion engine as claimed in claim 7 or 8, **characterised in that** the cam lobe (49) associated with the thimble tappet (46) that operates the centre intake valve (31) has its centre offset from the first plane (C) and the thimble tappet (46) actuates thereby has its centre lying on the first plane (C).

10. Internal combustion engine as claimed in at least one of the preceding claims 7 to 9, **characterised in that** the cam lobes (49) associated with the thimble tappets (46) of said two or said pair of side intake valves (32,33) have their centres disposed further from the first plane (C) then the centre of the associated thimble tappets (46).

11. Internal combustion engine as claimed in at least one of the preceding claims 7 to 10, **characterised in that** said two or said side intake valves (32,33) and correspondingly the associated thimble tappets (46) are disposed inclined at a small acute angle (H) with respect to the first plane (C), with the associated cam lobes (49) of the intake camshaft (48) being slightly tapered so as to minimise wear, the centres (D-1, D-3) of these cam lobes (49) being offset by the distances (b-1, b-3) from the centres of the thimble tappets (46).

12. Internal combustion engine as claimed in at least one of the preceding claims 3 to 11, **characterised in that** the valve seat (22) of the centre intake valve (31) being disposed closer to the axis (B) of the cylinder bore (13) than the pair of opposite valve seats (23,24) of the side intake valves (32,33) for defining a squish area (44,45) around the outer periphery of the valve seats (22,23,24) .

13. Internal combustion engine as claimed in at least one of the preceding claims 5 to 12, **characterised by** bearing surfaces (51) formed on the intake camshaft (48) between the adjacent cam lobes (49) which operate the centre and side intake valves (31,32,33) said bearing surfaces (51) are adapted for rotatably journaling the intake camshaft (48) in bearing surfaces (52) formed directly in the cylinder head (17) and by bearing cap means affixed to the cylinder head (16) and engaging said camshaft bearing surfaces (51) for rotatably journaling said intake camshaft (48).

14. Internal combustion engine as claimed in claim 13, **characterised in that** the bearing caps are affixed to the cylinder head (17) by at least a pair of threaded fastening means that are disposed at substantially the same distance from the second plane (A) as the threaded fastening means (76,77) for affixing the cylinder head (17) to the cylinder block (12).

15. Internal combustion engine as claimed in at least one of the preceding claims 1 to 14, **characterised by** a pair of cylinder head bolt threaded fastening means (76,77) for affixing the cylinder head (17) to the cylinder block (12) said cylinder head threaded fastening means (76,77) are disposed laterally outwardly offset with respect to the intake camshaft axis (F) and are substantially equidistantly disposed with respect to the second plane (A).

16. Internal combustion engine as claimed in claim 14, **characterised in that** the bearing caps' fastening means for affixing the bearing caps between the cam lobes (49) for operating the centre and side intake valves (31,32,33) are disposed at both sides of the intake camshaft (48) and substantially equidistantly offset with respect to the first plane (C), preferably outwardly disposed bearing caps' fastening means are substantially in line with the cylinder head threaded fastening means (76,77).

17. Internal combustion engine as claimed in at least one of preceding claims 3 to 15, **characterised in that** a spark plug receiving aperture (43) is formed centrally in the combustion chamber with its axis (C-1) being disposed slightly offset along the first plane (C) from the cylinder bore axis (B) and that a distance (a) of the valve seat (22) of the centre intake valve (31) being less than the distance (b) of a valve seat (23,24) of the side intake valves (32,33) from said spark plug receiving aperture (43).

18. Internal combustion engine as claimed in at least one of the preceding claims 1 to 17, **characterised in that** at least two poppet-type exhaust valves (61) are supported for reciprocation in said cylinder head (17) substantially on the other side of said second plane (A), said exhaust valves (61) being operated by an exhaust camshaft (68) that it rotatable about an axis (G), which is parallel to the axis (F) of the intake camshaft (48), but which is disposed spaced at a greater distance from the cylinder bore axis (B) than the axis (F) of the intake camshaft (48).

19. Internal combustion engine as claimed in claim 18, **characterised in that** threaded fasteners (75) provided at the exhaust side for affixing the cylinder head (17) to the cylinder block (12) are disposed below the exhaust camshaft (68) so as to have substantially the same distance from the second plane (A) as the axis (G) of the exhaust camshaft (68).

20. Internal combustion engine as claimed in at least one of the preceding claims 1 to 19, **characterised in that** the cylinder head (17) is formed with integral bores for slideably supporting thimble tappets (46) for actuating the respective intake and exhaust valves (31,32,33;67) said bores as well as the camshaft bearing surfaces (52) for rotatably supporting the intake camshaft (48) and the exhaust camshaft (68) being formed integrally with said cylinder head (17) so that said cylinder head (17) forms an integral piece for attachment to the cylinder block (12).

21. Internal combustion engine as claimed in at least one of the preceding claims 3 to 20, **characterised in that** at least three thimble tappet bores are formed integrally in said cylinder head (17) at the intake side in proximity to said bearing surfaces (52) on said intake side of that cylinder head (17) for slideably supporting respective thimble tappets (49) for operating said at least three intake valves (31,32,33) from said intake camshaft (48) while a second series of thimble tappet bores is formed on the other side of said second plane (A) integrally in said cylinder head (17) for receiving a second series of thimble tappets for operating said exhaust valves (67) from the exhaust camshaft (68).

22. Internal combustion engine as claimed in at least one of the preceding claims 1 to 21, **characterised in that** at least one of the air intake passages controlled by the intake valves (31,32,33) comprises an air intake control valve placed in a lower wall area of the related intake passage in order to facilitate creation of tumble action in the combustion chamber.

## Patentansprüche

1. Brennkraftmaschine mit einem Zylinderblock (12), der zumindest eine Zylinderbohrung (13) festlegt, in welcher ein Kolben (14) sich hin- und herbewegt, einer Kurbelwelle, die um eine Achse (16) drehbar an einem Ende der Zylinderbohrung (13) gelagert und von diesem Kolben (14) antreibbar ist, einem Zylinderkopf (17), der an dem Zylinderblock (12) angeschlossen ist und dieses andere Ende der Zylinderbohrung (13) einschließt, zumindest zwei Einlaßkanälen (26, 27), die in diesem Zylinderkopf (17) ausgebildet sind und bei zugeordneten Einlaßventilsitzen (23, 24) enden, die auf einander entgegengesetzten Seiten einer ersten Ebene (C) liegen, welche die Achse (B) der Zylinderbohrung (13) enthält und sich senkrecht zu der Rotationsachse (16) der Kurbelwelle erstreckt, zumindest zwei Einlaßventilen (32, 33) des Tellerventiltyps, die für eine Hin- und Herbewegung entlang einer entsprechenden Hubachse (B-2) von dem Zylinderkopf (17) gehalten sind und Kopfabschnitte aufweisen zur Steuerung des Flusses durch diese Einlaßventilsitze (23, 24), wobei die Hubachsen (B-2) der Einlaßventile jeweils in einem spitzen Winkel zu einer zweiten Ebene (A) liegen, die diese Zylinderbohrung-Achse (B) enthält und sich senkrecht zu dieser ersten Ebene (C) sowie mit einander entgegengesetzten spitzen Winkeln zu dieser ersten Ebene (C) erstreckt, **dadurch gekennzeichnet**, daß diese Hubachsen (B-2) sich in einem Punkt (E) unterhalb eines Kopfabschnittes (15) des Kolbens (14) schneiden, wenn sich dieser in seiner unteren Totpunktposition befindet, daß dieser Schnittpunkt (E) der Hubachsen (B-2) der zwei Einlaßventile (32, 33) innerhalb dieser ersten Ebene (C) angeordnet und näher zu einer Kurbelwellenachse (16) angeordnet ist als zu dem oberen Kopfabschnitt (15) des Kolbens (14), wenn sich dieser in seiner unteren Totpunktposition befindet, und daß die Ventilsitze (23, 24) sowie die zugeordneten Einlaßkanäle (26, 27) derart konfiguriert sind, daß sie innerhalb der Brennkammer einen Taumelvorgang erzeugen.

2. Brennkraftmaschine nach Anspruch 1, **dadurch gekennzeichnet**, daß die Einlaßkanäle (26, 27) stromabwärtige Abschnitte aufweisen, die allgemein sich parallel zu den Hubachsen (B-2) der zugeordneten Einlaßventile (32, 33) des Tellerventiltyps angrenzend an die entsprechenden Einlaßventilsitze (23, 24) erstrecken.

3. Brennkraftmaschine nach Anspruch 1 oder 2, **dadurch gekennzeichnet**, daß drei Einlaßkanäle (25, 26, 27) vorhanden sind, die zu drei zugeordneten Einlaßventilsitzen (22, 23, 24) führen, welche steuerbar sind von zwei Seiteneinlaßventilen (32, 33) und einem zentralen Einlaßventil (31), wobei das zentrale Einlaßventil (31) und der zugeordnete Einlaßventilsitz (22) im wesentlichen auf der ersten Ebene (C) und zwischen dem Paar der Einlaßventilsitze (23, 24) angeordnet sind, die zu den Seiteneinlaßventilen (32, 33) gehören, wobei dieses zentrale Einlaßventil (32) für eine Hin- und Herbewegung entlang einer Hubachse (B-1) abgestützt ist, welche mit der ersten Ebene (C) übereinstimmt.

4. Brennkraftmaschine nach Anspruch 3, **dadurch gekennzeichnet**, daß die Hubachse (B-1) des zentralen Einlaßventils (31) im wesentlichen mit der ersten Ebene (C) übereinstimmt und sich mit einem kleineren spitzen Winkel zu der zweiten Ebene (A) erstreckt als die Hubachsen (B-2) des Paares der Seiteneinlaßventile (32, 33).

5. Brennkraftmaschine nach zumindest einem der vorstehenden Ansprüche 1 bis 4, **dadurch gekennzeichnet**, daß die Einlaßventile (31, 32, 33) von einer Einlaßnockenwelle (48) betätigbar sind, die im Zylinderkopf (17) drehbar gehaltert ist und jedes der Einlaßventile (31,32, 33) über entsprechende Stößeltassen (46) betätigt, wobei diese Einlaßnockenwelle (48) Nockennasen (49) für jedes der Einlaßventile (31, 32, 33) aufweist, wobei die Hubachsen (B-1, B-2) der Einlaßventile (31, 32, 33) die Rotationsachse (F) von dieser Einlaßnockenwelle (48) schneiden.

6. Brennkraftmaschine nach zumindest einem der vorstehenden Ansprüche 1 bis 5, **dadurch gekennzeichnet**, daß die einander entgegengesetzte Neigung der Hubachsen (B-2) von diesen zwei oder diesen Seiteneinlaßventilen (32, 33) bezüglich der ersten Ebene (C) gleich zueinander ist und bevorzugt angenähert 2° beträgt.

7. Brennkraftmaschine nach Anspruch 5 oder 6, **dadurch gekennzeichnet**, daß die Nokkennasen (49) der Einlaßnockenwelle (48) die entsprechenden Stößeltassen (46) an einem Punkt ergreifen, der von dem Zentrum der Stößeltassen (46) versetzt ist, um eine Rotationskraft auf die Stößeltassen (46) auszuüben.

8. Brennkraftmaschine nach Anspruch 7, **dadurch gekennzeichnet**, daß die Nockennasen (49), die den Stößeltassen (46) des Paares der Seiteneinlaßventile (32, 33) zugeordnet sind, Mittelpunkte aufweisen, die weiter von der ersten Ebene (C) enffernt sind als die Zentren der entsprechenden Stößeltassen (46).

9. Brennkraftmaschine nach Anspruch 7 oder 8, **dadurch gekennzeichnet**, daß die Nokkennase (49), die der Stößeltasse (46) zugeordnet ist, welche das zentrale Einlaßventil (31) betätigt, ein Zentrum aufweist, das von der ersten Ebene (C) versetzt ist, und die Stößeltasse (46) betätigt, wodurch ihr Zentrum sich in der ersten Ebene (C) befindet.

10. Brennkraftmaschine nach zumindest einem der vorstehenden Ansprüche 7 bis 9, **dadurch gekennzeichnet**, daß die Nockennasen (49), die den Stößeltassen (46) dieser zwei oder dieses Paares von Seiteneinlaßventilen (32, 33) zugeordnet sind, mit ihren Zentren weiter von der ersten Ebene (C) versetzt sind als die Zentren der zugeordneten Stößeltassen (46).

11. Brennkraftmaschine nach zumindest einem der vorstehenden Ansprüche 7 bis 10, **dadurch gekennzeichnet**, daß die zwei oder diese Seiteneinlaßventile (32, 33) sowie entsprechend die zugeordneten Stößeltassen (46) geneigt angeordnet sind mit einem kleinen spitzen Winkel (H) bezüglich der ersten Ebene (C), wobei die zugeordneten Nockennasen (49) der Einlaßnockenwelle (48) geringfügig konisch zulaufen, um eine Abnutzung zu minimieren, und wobei die Zentren (D-1, D-3) von diesen Nockennasen (49) von den Zentren der Stößeltassen (46) um die Distanzen (b-1, b-3) versetzt sind.

12. Brennkraftmaschine nach zumindest einem der vorstehenden Ansprüche 3 bis 11, **dadurch gekennzeichnet**, daß der Ventilsitz (22) des zentralen Einlaßventils (31) näher an die Achse (B) der Zylinderbohrung (13) angeordnet ist, als das Paar der einander entgegengesetzten Ventilsitze (23, 24) der Seiteneinlaßventile (32, 33) zur Festlegung eines Quetschbereiches (44, 45) um den äußeren Rand der Ventilsitze (22, 23, 24).

13. Brennkraftmaschine nach zumindest einem der vorstehenden Ansprüche 5 bis 12, **gekennzeichnet durch** Lageroberflächen (51), die auf der Einlaßnockenwelle (48) zwischen aneinander angrenzenden Nockennasen (49) ausgebildet sind, die die Zentren und Seiteneinlaßventile (31, 32, 33) betätigen, wobei diese Lageroberflächen (51) dazu ausgelegt sind, die Einlaßnockenwelle (48) in Lageroberflächen (52) drehbar zu haltern, die direkt in dem Zylinderkopf (17) ausgeformt sind, sowie mittels Lagerkappeneinrichtungen, die an dem Zylinderkopf (16) angeschlossen sind und diese Nockenwellenlageroberflächen (51) für eine drehbare Halterung dieser Einlaßnockenwelle (48) ergreifen.

14. Brennkraftmaschine nach Anspruch 13, **dadurch gekennzeichnet**, daß die Lagerkappen an dem Zylinderkopf (17) mit zumindest einem Paar von mit Gewinde versehenen Befestigungseinrichtungen angeschlossen sind, die mit im wesentlichen gleicher Entfernung von der zweiten Ebene (A) angeordnet sind wie die mit Gewinde versehenen Befestigungseinrichtungen (76, 77) zur Befestigung des Zylinderkopfes (17) an den Zylinderblock (12).

15. Brennkraftmaschine nach zumindest einem der vorstehenden Ansprüche 1 bis 14, **gekennzeichnet durch** ein Paar von mit Gewinde versehenen Befestigungseinrichtungen (76, 77) in Form von Zylinderkopfbolzen zur Befestigung des Zylinderkopfes (17) an dem Zylinderblock (12), wobei diese mit Gewinde versehenen Befestigungseinrichtungen (76, 77) für den Zylinderkopf lateral auswärts versetzt bezüglich der Einlaßnockenwellenachse (F) angeordnet sind und im wesentlichen äquidistant bezüglich der zweiten Ebene (A) positioniert sind.

16. Brennkraftmaschine nach Anspruch 14, **dadurch gekennzeichnet**, daß die Befestigungseinrichtungen zur Befestigung der Lagerkappen diese Lagerkappen zwischen den Nockennasen (49) zur Betätigung der zentralen und Seiteneinlaßventile (31, 32, 33) zu beiden Seiten der Einlaßnockenwelle (48) sowie im wesentlichen äquidistant bezüglich der ersten Ebene (C) versetzt angeordnet sind, bevorzugt befinden sich dabei die Befestigungseinrichtungen für die Lagerkappen im wesentlichen in einer Linie mit den Befestigungseinrichtungen (76, 77) für den Zylinderkopf nach außen versetzt.

17. Brennkraftmaschine nach zumindest einem der vorstehenden Ansprüche 3 bis 15, **dadurch gekennzeichnet**, daß eine Öffnung (43) zur Aufnahme einer Zündkerze zentral in der Brennkammer ausgebildet ist, wobei die entsprechende Achse (C-1) geringfügig entlang der ersten Ebene (C) von der Zylinderbohrungsachse (B) versetzt ist, und daß die Distanz (a) zwischen dem Ventilsitz (22) des zentralen Einlaßventils (31) geringer ist als die Distanz (b) zwischen einem Ventilsitz (23, 24) der Seiteneinlaßventile (32, 33) zwischen der Öffnung (43) zur Aufnahme der Zündkerze.

18. Brennkraftmaschine nach zumindest einem der vorstehenden Ansprüche 1 bis 17, **dadurch gekennzeichnet**, daß zumindest zwei Auslaßventile (61) des Tellerventiltyps in diesem Zylinderkopf (17) für eine Hin- und Herbewegung abgestützt sind, und zwar im wesentlichen auf der anderen Seite von dieser zweiten Ebene (A), wobei diese Auslaßventile (61) von einer Auslaßnockenwelle (68) betätigbar sind, die um eine Achse (G) drehbar ist, welche parallel zu der Achse (F) der Einlaßnockenwelle (48) verläuft, aber zu der Zylinderbohrungsachse (B) eine größere Entfernung aufweist als die Achse (F) der Einlaßnockenwelle (48).

19. Brennkraftmaschine nach Anspruch 18, **dadurch gekennzeichnet**, daß mit Gewinde versehene Befestigungsmittel (75), die an der Auslaßseite zur Befestigung des Zylinderkopfes (17) an dem Zylinderblock (12) vorgesehen sind, unterhalb der Auslaßnockenwelle (68) angeordnet sind, um so im wesentlichen die gleiche Entfernung von der zweiten Ebene (A) aufzuweisen, wie die Achse (G) der Auslaßnockenwelle (68).

20. Brennkraftmaschine nach zumindest einem der vorstehenden Ansprüche 1 bis 19, **dadurch gekennzeichnet**, daß der Zylinderkopf (17) mit einstückig ausgebildeten Bohrungen ausgebildet ist zur gleitenden Aufnahme der Stößeltassen (46) zur Betätigung der entsprechenden Einlaß- und Auslaßventile (31, 32, 33; 67), wobei sowohl diese Bohrungen als auch diese Nockenwellenlageroberflächen (52) zur drehbaren Abstützung der Einlaßnokkenwelle (48) und der Auslaßnockenwelle (68) einstückig mit dem Zylinderkopf (17) derart ausgebildet sind, daß der Zylinderkopf (17) ein einheitliches Stück zur Befestigung an den Zylinderblock (12) bildet.

21. Brennkraftmaschine nach zumindest einem der vorstehenden Ansprüche 3 bis 20, **dadurch gekennzeichnet**, daß zumindest drei Bohrungen für Stößeltassen einheitlich in diesem Zylinderkopf (17) auf der Einlaßseite in der Nähe dieser Lageroberflächen (52) auf der Einlaßseite von diesem Zylinderkopf (17) angeordnet sind zur gleitenden Aufnahme entsprechender Stößeltassen (49) zur Betätigung dieser zumindest drei Einlaßventile (31, 32, 33) mittels dieser Einlaßnockenwelle (48), während eine zweite Reihe von Bohrungen für Stößeltassen auf der anderen Seite von dieser zweiten Ebene (A) einheitlich in diesem Zylinderkopf (17) ausgebildet ist zur Aufnahme einer zweiten Reihe von Stößeltassen zur Betätigung der Auslaßventile (67) mittels der Auslaßnockenwelle (68).

22. Brennkraftmaschine nach zumindest einem der vorstehenden Ansprüche 1 bis 21, **dadurch gekennzeichnet**, daß zumindest einer dieser Lufteinlaßkanäle, der von den Einlaßventilen (31, 32, 33) gesteuert wird, ein Lufleinlaßsteuerventil aufweist, das in einem unteren Wandbereich des entsprechenden Einlaßkanals angeordnet ist, um die Erzeugung einer Taumelfunktion in der Brennkammer zu ermöglichen.

## Revendications

1. Moteur à combustion interne comprenant un bloc-cylindres (12) définissant au moins un alésage (13) dans lequel un piston (14) effectue un mouvement alternatif, un vilebrequin tourillonné afin de tourner autour d'un axe (16) à une extrémité dudit alésage (13) et actionné par ledit piston (14), une culasse (17) fixée audit bloc-cylindres (12) et comprenant l'autre extrémité dudit alésage (13), au moins deux passages d'admission (26, 27) formés dans ladite culasse (17) et terminés au niveau de sièges de soupapes d'admission associés (23, 24) reposant sur les côtés opposés d'un premier plan (C) contenant l'axe (B) dudit alésage (13) et s'étendant perpendiculairement à l'axe de rotation (16) dudit vilebrequin, au moins deux soupapes d'admission (32, 33) du type soupape-champignon supportées pour effectuer un mouvement alternatif autour d'axes d'oscillation respectifs (B-2) par ladite culasse (17) et ayant des parties de tête afin de commander le débit dans lesdits sièges de soupapes d'admission (23, 24), lesdits axes d'oscillation (B-2) des soupapes d'admission reposant à angles aigus par rapport à un deuxième plan (A) contenant ledit axe (B) d'alésage s'étendant perpendiculairement audit plan (C) et selon des angles aigus opposés par rapport audit premier plan (C), caractérisé en ce que lesdits axes d'oscillation (B-2) se coupent au niveau d'un point (E) situé au-dessous d'une partie de tête (15j du piston (14) lorsqu'il est dans sa position de point mort bas, ledit point d'intersection (E) des axes d'oscillation (B-2) des deux soupapes d'admission (32, 33) étant disposé à l'intérieur dudit premier plan (C) et étant disposé plus près d'un axe de vilebrequin (16) que de la partie de tête supérieure (15) du piston (14) lorsqu'il est dans sa position de point mort bas, et en ce que les sièges de soupapes (23, 24) et les passages d'admissions associés (26, 27) sont configurés de telle sorte qu'ils génèrent une action de culbute à l'intérieur de la chambre de combustion.

2. Moteur à combustion interne selon la revendication 1, caractérisé en ce que les passages d'admission (26, 27) possèdent des parties aval qui s'étendent globalement parallèlement aux axes d'oscillation (B-2) des soupapes d'admission (32, 33) du type soupape-champignon associées adjacentes aux sièges de soupapes d'admission (23, 24) respectifs.

3. Moteur à combustion interne selon la revendication 1 ou la revendication 2, caractérisé en ce que trois passages d'admission (25, 26, 27) sont prévus pour déboucher sur trois sièges de soupapes d'admission associés (22, 23, 24) commandés par deux soupapes d'admission latérales (32, 33) et une soupape d'admission centrale (31), ladite soupape d'admission centrale (31) et le siège de soupape d'admission (22) associé étant disposés sensiblement sur le premier plan (C) et entre les deux sièges de soupapes d'admission (23, 24) appartenant aux soupapes d'admission latérales (32, 33), ladite soupape d'admission centrale (32) étant supportée à des fins de mouvement alternatif le long d'un axe d'oscillation (B-1) qui coïncide avec le premier plan (C).

4. Moteur à combustion interne selon la revendication 3, caractérisé en ce que l'axe d'oscillation (B-1) de la soupape d'admission centrale (31) coïncide sensiblement avec le premier plan (C) et s'étend selon un angle moins aigu par rapport au deuxième plan (A), que les axes d'oscillation (B-2) des deux soupapes d'admission latérales (32, 33).

5. Moteur à combustion interne selon l'une au moins des revendications précédentes 1 à 4, caractérisé en ce que les soupapes d'admission (31, 32, 33) sont mises en service par un arbre à cames d'admission (48) tourillonné de manière rotative par la culasse (17) et actionnant chacune des soupapes d'admission (31, 32, 33) au moyen de poussoirs à cosses (46) respectifs, ledit arbre à cames d'admission (48) ayant des bossages de came (49) pour chacune des soupapes d'admission (31, 32, 33), les axes d'oscillation (B-1, B-2) des soupapes d'admission (31, 32, 33) coupant l'axe de rotation (F) dudit arbre à cames d'admission (48).

6. Moteur à combustion interne selon au moins l'une quelconque des revendications précédentes 1 à 5, caractérisé en ce que les inclinaisons opposées des axes d'oscillation (B-2) desdites deux ou desdites soupapes d'admission latérales (32, 33), par rapport au premier plan (C), sont égales l'une à l'autre et s'élèvent de préférence à environ 2°.

7. Moteur à combustion interne selon la revendication 5 ou la revendication 6, caractérisé en ce que les bossages de came (49) de l'arbre à cames d'admission (48) viennent en prise avec les poussoirs à cosses (46) respectifs à un point décalé du centre des poussoirs (46) afin d'exercer une force de rotation sur les poussoirs à cosses (46).

8. Moteur à combustion interne selon la revendication 7, caractérisé en ce que les bossages de came (49) associés aux poussoirs à cosses (46) des deux soupapes d'admission latérales (32, 33) ont leurs centres disposés plus loin du premier plan (C) que le centre des poussoirs à cosses (46) respectifs.

9. Moteur à combustion interne selon la revendication 7 ou la revendication 8, caractérisé en ce que le bossage de came (49) associé au poussoir à cosse (46) qui actionne la soupape d'admission centrale (31) a son centre décalé du premier plan (C) et le poussoir à cosse (46) qui réalise l'actionnement a son centre situé dans le premier plan (C).

10. Moteur à combustion interne selon au moins l'une des revendications 7 à 9 précédentes, caractérisé en ce que les bossages de cames (49) associés aux poussoirs à cosses (46) desdites deux ou de ladite paire de soupapes d'admission latérales (32, 33) ont leurs centres disposés plus loin du premier plan (C) que le centre des poussoirs à cosses (46) associés.

11. Moteur à combustion interne selon au moins l'une des revendications 7 à 10 précédentes, caractérisé en ce que lesdites deux ou lesdites soupapes d'admission latérales (32, 33) et de manière correspondante les poussoirs à cosses (46) associés sont disposés de manière inclinée selon un petit angle aigu (H) par rapport au premier plan (C), les bossages de cames associés (49) de l'arbre à cames d'admission (48) étant légèrement effilés afin de minimiser l'usure, les centres (D-1, D-3) de ces bossages de cames (49) étant décalés des distances (b-1, b-3) des centres des poussoirs à cosses (46).

12. Moteur à combustion interne selon au moins l'une des revendications précédentes 3 à 11, caractérisé en ce que le siège de soupape (22) de la soupape d'admission centrale (31) est disposée plus près de l'axe (B) de l'alésage (13) que les deux sièges de soupapes opposés (23, 24) des soupapes d'admission latérales (32, 33) afin de définir une zone d'écrasement (44, 45) autour de la périphérie extérieure des sièges de soupapes (22, 23, 24).

13. Moteur à combustion interne selon au moins l'une des revendications précédentes 5 à 12, caractérisé par des surfaces de palier (51) formées sur l'arbre à cames d'admission (48) entre les bossages de cames (49) adjacents qui actionnent les soupapes d'admission centrale et latérales (31, 32, 33), lesdites surfaces de palier (51) sont adaptées pour tourillonner de manière rotative l'arbre à cames d'admission (48) dans des surfaces de palier (52) formées directement dans la culasse (17) et par des moyens de chapeau de palier fixés à la culasse (17) et venant en prise avec lesdites surfaces de palier d'arbre à cames (51) afin de tourillonner de manière rotative ledit arbre à cames d'admission (48).

14. Moteur à combustion interne selon la revendication 13, caractérisé en ce que les chapeaux de paliers sont fixés à la culasse (17) par au moins une paire de moyens d'attache filetés qui sont disposés sensiblement à la même distance du deuxième plan (A) que les moyens d'attache filetés (76, 77) pour fixer la culasse (17) au bloc-cylindres (12).

15. Moteur à combustion interne selon au moins l'une des revendications précédentes 1 à 14, caractérisé par une paire de moyens d'attache filetés (76, 77) de boulons de culasse pour fixer la culasse (17) au bloc-cylindres (12), lesdits moyens d'attache filetés de culasse (76, 77) sont disposés de manière latérale avec un décalage vers l'extérieur par rapport à l'axe (F) d'arbre à cames d'admission et sont sensiblement disposés à la même distance par rapport au deuxième plan (A).

16. Moteur à combustion interne selon la revendication 14, caractérisé en ce que les moyens de fixation des chapeaux de paliers destinés à fixer les chapeaux de paliers entre les bossages de cames (49) pour actionner les soupapes d'admission centrale et latérales (31, 32, 33) sont disposés des deux côtés de l'arbre à cames d'admission (48) et sensiblement décalés à égale distance par rapport au premier plan (C), les moyens de fixation des chapeaux de paliers, de préférence disposés à l'extérieur, sont sensiblement alignés avec les moyens de fixation filetés (76, 77) de la culasse.

17. Moteur à combustion interne selon au moins l'une des revendications précédentes 3 à 15, caractérisé en ce qu'une ouverture (43) de logement de bougie est formée au centre de la chambre de combustion, son axe (C-1) étant disposé légèrement décalé le long du premier plan (C) de l'axe d'alésage (B) et en ce qu'une distance (a) du siège de soupape (22) de la soupape d'admission centrale (31) est inférieure à la distance (b) d'un siège de soupape (23, 24) des soupapes d'admission latérales (32, 33) depuis ladite ouverture (43) de logement de bougie.

18. Moteur à combustion interne selon au moins l'une des revendications précédentes 1 à 17, caractérisé en ce qu'au moins deux soupapes d'échappement (61) du type soupape-champignon sont supportées de manière à effectuer un mouvement alternatif dans ladite culasse (17) sensiblement de l'autre côté dudit deuxième plan (A), lesdites soupapes d'échappement (61) étant actionnées par un arbre à cames d'échappement (68) qui peut tourner autour d'un axe (G), qui est parallèle à l'axe (F) de l'arbre à cames d'admission (48), mais qui est disposé espacé de manière plus importante de l'axe d'alésage (B) que l'axe (F) de l'arbre à cames d'admission (48).

19. Moteur à combustion interne selon la revendication 18, caractérisé en ce que des fixations filetées (75) prévues du côté de l'échappement afin de fixer la culasse (17) au bloc-cylindres (12) sont disposées au-dessous de l'arbre à cames d'échappement (68) afin d'avoir sensiblement la même distance depuis le deuxième plan (A) que l'axe (G) de l'arbre à cames d'échappement (68).

20. Moteur à combustion interne selon au moins l'une des revendications précédentes 1 à 19, caractérisé en ce que la culasse (17) est formée d'alésages d'un seul tenant afin de supporter de manière coulissante des poussoirs à cosses (46) afin d'actionner les soupapes d'admission et d'échappement respectives (31, 32, 33 ; 67), lesdits alésages ainsi que les surfaces de paliers d'arbre à cames (52) afin de supporter en rotation l'arbre à cames d'admission (48) et l'arbre à cames d'échappement (68) étant formés d'un seul tenant avec ladite culasse (17) de telle sorte que ladite culasse (17) forme une pièce d'un seul tenant destinée à s'attacher au bloc-cylindres (12).

21. Moteur à combustion interne selon au moins l'une des revendications précédentes 3 à 20, caractérisé en ce qu'au moins trois alésages de poussoirs à cosses sont formés d'un seul tenant dans ladite culasse (17) du côté de l'admission à proximité desdites surfaces de paliers (52) dudit côté d'admission de la culasse (17) pour supporter de manière coulissante les poussoirs à cosses respectifs (49) afin d'actionner lesdites au moins trois soupapes d'admission (31, 32, 33) à partir dudit arbre à cames d'admission (48) tandis qu'une seconde série d'alésages de poussoirs à cosses est formée, de l'autre côté dudit deuxième plan (A), d'un seul tenant dans ladite culasse (17) afin de recevoir une deuxième série de poussoirs à cosses pour actionner lesdites soupapes d'échappement (67) de l'arbre à cames d'échappement (68).

22. Moteur à combustion interne selon au moins l'une des revendications précédentes 1 à 21, caractérisé en ce qu'au moins l'un des passages d'admission d'air commandés par les soupapes d'admission (31, 32, 33) comprend une soupape de commande d'admission d'air placée dans une zone de paroi inférieure du passage d'admission concerné afin de faciliter la création d'une action de culbute dans la chambre de combustion.
